# EUROPÄISCHE PATENTSCHRIFT

(11) **EP 0 310 771 B1**
(45) Veröffentlichungstag und Bekanntmachung des Hinweises auf die Patenterteilung: **07.04.1993**
(21) Anmeldenummer: 88112019.0
(22) Anmeldetag: 26.07.1988
(51) Int. Cl.: E02D 31/00, E02D 19/16, E02B 3/12

(54) **Dichtung für Speicherräume**
Sealant for reservoirs
Etanchéisation pour réservoirs

(30) Priorität: 07.10.1987 DE 3733867
(43) Veröffentlichungstag der Anmeldung: 12.04.1989
(73) Patentinhaber: STRABAG BAU - AG, D-50535 Köln (DE)
(72) Erfinder: Haas, Hans, Dr. Dipl.-Ing., D-5064 Rösrath 1 (DE); Eggers, Alexander, D-4044 Kaarst 1 (DE); John, Erwin, D-5000 Köln 80 (DE); Pfeifle, Klaus, D-5216 Niederkassel 1 (DE)
(74) Vertreter: Hennicke, Albrecht, Dipl.-Ing.

(56) Entgegenhaltungen:
- DE-A- 2 805 857
- DE-B- 1 278 360
- FR-A- 1 142 306
- GB-A- 323 107

## Beschreibung

Die Erfindung betrifft eine Dichtung für Speicherräume von Flüssigkeiten, Feststoffen, Feststoffgemischen, Schüttgütern, Abfallstoffen, Sondermüll u.dgl., mit mindestens einer Schicht aus einer Dichtungsmasse, die ein bituminöses Bindemittel und feinkörnige Zuschlagstoffe (Füller) aufweist.

Es ist bekannt, Speicherräume für Wasser, wie Talsperren, Löschwasserteiche u.dgl., aber auch Mülldeponien zum Endlagern von Abfallstoffen, mit mineralischen Dichtungen, wie z.B. Tonschichten, gegenüber dem Untergrund abzudichten. Anstelle von Tondichtungen werden auch Kunststoffolien verwendet, die auf einer Unterlage aus Sandasphalt verlegt und an der Oberseite mit einer Schutzschicht aus Asphaltbeton überzogen werden (DE-A-28 05 857). Es hat sich aber gezeigt, daß Kunststoffolien, die gegenüber Wasser und wässrigen Lösungen absolut dicht sind, von organischen Treibstoffen und bestimmten Lösungsmitteln, insbesondere von chlorierten Kohlenwasserstoffen, wie sie oft in Sondermülldeponien vorhanden sind, permeiert werden, ohne daß hierbei die Kunststoffolien zerstört werden. Diese Permeation vollzieht sich wahrscheinlich in Form einer Durchwanderung, die vom Konzentrationsgefälle abhängig ist, das zwischen den beiden Seiten der Dichtung besteht.

Es ist auch bekannt, zum Abdichten von mit Wasser gefüllten Speicherräumen Asphaltdichtungen zu verwenden, die als Kerndichtungen, beispielsweise im Inneren von Erddämmen für Talsperren ausgeführt werden (FR-A-1 142 306). Andere Asphaltdichtungen für Speicherräume sind Oberflächendichtungen, die die Sohle und Böschungen von Speicherbecken, künstlichen Wasserläufen, wie Kanälen od.dgl. bedecken (GB-A-323 107). Derartige Asphaltdichtungen sind, im Gegensatz zu den nur relativ dichten Tondichtungen, gegenüber Wasser auch unter höchsten Drücken in der Regel absolut dicht. Dies gilt auch für alle in der Praxis auftretenden wässrigen Lösungen, die beim Auflösen wasserlöslicher Stoffe im Niederschlagswasser entstehen können.

Trotz dieser guten Dichtungseigenschaften, die Asphaltdichtungen haben und die bei Asphaltdichtungen gegen Wasser und wässrige Medien oft schon dann erreicht werden, wenn das Gemisch aus Bindemittel und Zuschlag im verdichteten Zustand nur etwa 7 Gew.-% an bituminösem Bindemittel aufweist, sind bisher Asphaltdichtungen für Speicherräume nicht in Erwägung gezogen worden, in denen neben wässrigen oder wasserlöslichen Stoffen auch organische Flüssigkeiten, wie Treibstoffe oder Lösungsmittel, an die Dichtung gelangen können. Insbesondere bei Mülldeponien und Lagerstätten für Sondermüll wurde befürchtet, daß organische Flüssigkeiten mit der Asphaltdichtung unkontrolliert in Berührung kommen könnten, wobei diese Flüssigkeiten das bituminöse Bindemittel auflösen und hierdurch die Asphaltdichtung unwirksam machen.

Die am meisten gefürchteten Flüssigkeiten sind hierbei die chlorierten Kohlenwasserstoffe, welche die besten Lösungsmittel überhaupt sind. Sie sind in Wasser nahezu unlöslich und gelangen, da sie schwerer als Wasser sind, in Gegenwart von Niederschlagswasser unter das Wasser und damit unmittelbar auf die Dichtung. Da diese chlorierten Kohlenwasserstoffe auch sehr schwer biologisch abbaubar sind, muß unbedingt verhindert werden, daß sie in den Untergrund eindringen.

Aufgabe der Erfindung ist es, eine preiswerte Dichtung für Speicherräume aller Art zu schaffen, die nicht nur wasserdicht ist, sondern auch von organischen Flüssigkeiten während eines langen Zeitraumes nicht aufgelöst werden kann und die auch für chlorierte Kohlenwasserstoffe nicht permeierbar ist und über lange Zeiträume hinweg dicht bleibt.

Diese Aufgabe wird mit der Erfindung dadurch gelöst, daß die Dichtungsmasse gerade soviel bituminöses Bindemittel enthält, daß sie in heißem Zustand ohne nennenswerte Verdichtungsenergie hohlraumfrei eingebaut werden kann und daß die Dicke der Schicht mindestens so groß ist, daß die in ihr je Flächeneinheit enthaltene Bindemittelmenge mindestens die Hälfte der auf die Flächeneinheit ungünstigstenfalls dauernd einwirkenden Menge von im Speicherraum vorhandenen organischen Treibstoffen oder Lösungsmitteln, insbesondere von chlorierten Kohlenwasserstoffen ausmacht.

Eine derartig aufgebaute Asphaltdichtung ist nicht nur wasserdicht, sondern überraschenderweise auch für organische Flüssigkeiten, wie z.B. für chlorierte Kohlenwasserstoffe, impermeabel. Außerdem ist die Asphaltdichtung verschleißfest und genügend druckfest, so daß sie begangen und von Fahrzeugen befahren werden kann. Hierdurch ist es möglich, einen mit der Asphaltdichtung ausgekleideten Speicherraum zu reinigen und nötigenfalls zu reparieren oder durch zusätzliche Asphaltschichten zu verstärken.

Wie Untersuchungen gezeigt haben, ist es für die impermeable Asphaltdichtung nach der Erfindung wesentlich, daß die Dichtungsschicht keinerlei Hohlräume aufweist und daß eine bestimmte Mindestmenge an feinkörnigen Zuschlagstoffen (Füller) vorhanden ist. Andererseits muß in Abhängigkeit von der Menge der auf die Dichtung einwirkenden Angriffsmedien eine genügende Menge an bituminösem Bindemittel vorhanden sein, um die Dichtung impermeabel zu nachen.

Wie festgestellt wurde, kann die Dichtungsmasse auch gröbere Zuschlagstoffe (Korndurchmesser > 0,09 mm) enthalten, wenn der Gewichtsanteil an Füller (Korndurchmesser < 0,09 mm), bezogen auf das Gesamtgewicht aller Zuschlagstoffe, so groß ist, daß im eingebauten Zustand die aus Füller und Bindemittel bestehende Mörtelmenge größer ist als das Volumen der Hohlräume zwischen den gröberen Zuschlagstoffen. Es hat sich nämlich gezeigt, daß die Kornabstufung und ihr Mengenverhältnis zueinander nicht beliebig oder etwa so erfolgen kann, wie dies beispielsweise bei Asphaltbetondichtungen im Talsperrenbau bekannt ist. Vielmehr liefern, nach den mit der Erfindung gewonnenen Erkenntnissen, grobkörnige Zuschlagstoffe, wie Kies oder Gesteinssplitt, den permeierenden Stoffen Brücken, über die sie leichter durch die Dichtungsschichten diffundieren können.

Der Gewichtsanteil der feinkörnigen Zuschlagstoffe sollte mindestens 20 % des Gesamtgewichtes aller Zuschlagstoffe betragen, wobei die Zuschlagstoffe zweckmäßig Faserstoffe als versteifende Stoffe enthalten.

Durch Zusatz von Polymeren zum bituminösen Bindemittel kann die Dichtigkeit verbessert und der Widerstand gegen Anlösung der Oberfläche der Dichtung erhöht werden. Die Modifizierung der bituminösen Bindemittel kann hierbei z.B. durch Zumischen von Polyäthylen oder Polypropylen erzielt werden.

Da es bei Kontakt von Lösungsmitteln mit der bituminösen Dichtungsfläche nach der Erfindung zu Anlösungen der Oberfläche kommt, ist es bei Oberflächendichtungen zweckmäßig, die dem Speicherraum zugewandte Oberfläche der Dichtung mit einer Schutzschicht abzudecken, die selbst nicht undurchlässig gegenüber der betreffenden Flüssigkeit sein muß, aber verhindert, daß bei Spül- und Fließvorgängen des Angriffsmediums größere Bindemittelmengen aus dem Asphalt herausgelöst werden. Diese Schutzschichten können beispielsweise aus Sand, Erde, Ton oder Magerbeton bestehen und der Dichtungsoberfläche mechanischen Schutz bieten.

Für bestimmte Anwendungsfälle kann es auch zweckmäßig sein, eine Schutzschicht aus Kunstharz, beispielsweise aus einem Epoxidharz oder einem Teer-Epoxidharzgemisch, vorzusehen. Eine Versiegelung oder Beschichtung der Dichtung nach der Erfindung mit derartigen Kunstharzprodukten verhindert ein Herauslösen von bituminösem Bindemittel aus der Oberfläche der erfindungsgemäßen, bituminösen Dichtungsschicht, auch wenn diese Kunstharzprodukte für chlorierte Kohlenwasserstoffe permeabel sind. Die Asphaltdichtung bleibt dadurch mit Sicherheit auch bei eventuellen Spül- und Fließbewegungen des Angriffsmediums in der vollen notwendigen Dicke erhalten und gewährleistet einen vollen Permeationsschutz gegen organische Flüssigkeiten und Lösungsmittel aller Art.

Die Erfindung wird durch die Zeichnung und an Ausführungsbeispielen näher erlutert. Es zeigt:
- Fig. 1: ein Auffangbecken für Löschwasser oder chemische Flüssigkeiten, die in Katastrophenfällen z.B. in chemischen Werken anfallen können, mit einer Oberflächendichtung nach der Erfindung in einer perspektivischen Darstellung,
- Fig. 2: einen Teilquerschnitt durch die Oberflächendichtung bei dem Speicherbecken nach Fig. 1 in vergrößertem Maßstab und
- Fig. 3: eine Kerndichtung in einem Damm, der eine Mülldeponie begrenzt, in einem schematischen Querschnitt.

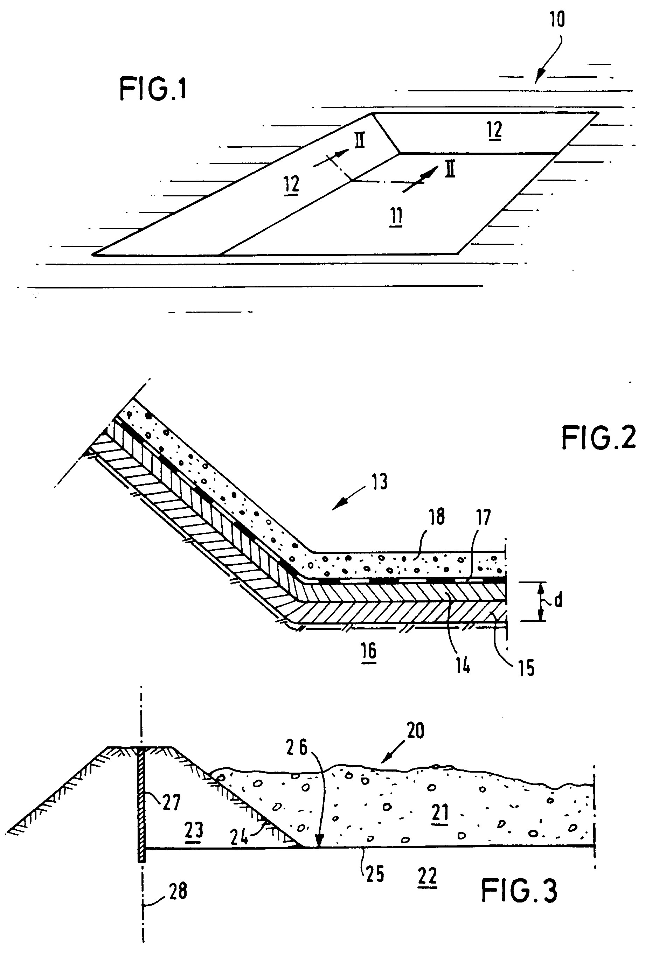

In Fig. 1 ist mit 10 ein offenes Auffangbecken für Flüssigkeiten bezeichnet, die organische Stoffe oder Lösungsmittel enthalten können. Die Sohle 11 und die Böschungen 12 dieses Auffangbeckens sind mit einer Dichtung 13 versehen, die aus zwei Dichtungsschichten 14 und 15 besteht. Die untere Dichtungsschicht 15, die auf dem Untergrund 16 aufliegt, ist eine bituminöse Dichtungsschicht, die als Zuschlagstoff Gesteinsmehl und gröbere Zuschläge aufweist, während die obere Dichtungsschicht 14 eine Asphaltdichtung ist, die als Zuschlagstoff ausschließlich feinkörnige Zuschläge enthält.

Die obere Dichtungsschicht 14 ist mit einer Kunstharzschicht 17 aus Epoxidharz beschichtet. Statt einer Kunstharzschicht kann auch eine Schutzschicht aus Sand oder Magerbeton verwendet werden, die in Fig. 2 mit 18 angedeutet ist.

Beide Asphalt-Dichtungsschichten enthalten gerade soviel bituminöses Bindemittel, daß die Dichtungsmasse in heißem Zustand, d.h. bei einer Temperatur von oberhalb 150°, ohne nennenswerte Verdichtungsenergie hohlraumfrei eingebaut werden kann, aber sich in ihr keine Zuschlagstoffe absetzen. Ein solcher Einbau ist ohne weiteres mit Einbaugeräten für bituminöses Mischgut möglich, wie sie zum Aufbringen von bituminösen Oberflächendichtungen für Wasserbauwerke eingesetzt werden und die ein heißes Mischgut verteilen und mit einer Abziehbohle in der gewünschten Dicke ebenflächig abziehen können.

Die Dicke d der beiden Dichtungsschichten 14 und 15 zusammengenommen ist mindestens so groß, daß die in ihnen je Flächeneinheit enthaltene Bindemittelmenge etwa die Hälfte der auf die Flächeneinheit ungünstigstenfalls dauernd einwirkenden Treibstoff- oder Lösungsmittelmenge ausmacht.

In Fig. 3 ist mit 20 eine Deponie für Sondermüll 21 bezeichnet, der auch chlorierte Kohlenwasserstoffe enthält. Die Deponie ist auf einem Untergrund 22 angelegt, der ausreichende Tragfähigkeit aufweist. Sie wird von einem Damm 23 rings umgeben. Die Sohlfläche 25 der Deponie ist mit einer Asphaltdichtung 26 nach der Erfindung abgedeckt, die bis zur Achse 28 des Dammes 23 reicht. In dem Damm 23 ist eine Kerndichtung 27 eingebaut, die an die Dichtung 26 anschließt. Diese Kerndichtung 27 ist in ähnlicher Weise aufgebaut wie die Oberflächendichtungen 15 des Ausführungsbeispiels nach Fig. 1, d.h. sie hat nicht nur Zuschlagstoffe der Korngröße < 0,09 mm, sondern auch gröbere Zuschlagstoffe mit einem Korndurchmesser > 0,09 mm. Hierbei ist jedoch der Gewichtsanteil an Füller, d.h. an solchen Zuschlagstoffen, bei denen mindestens 80 % einen Korndurchmesser < 0,09 mm haben, bezogen auf das Gesamtgewicht aller Zuschlagstoffe, so groß, daß der aus Füller und Bindemittel bestehende Mörtel im Überschuß vorhanden ist.

Für die Dichtungsmasse nach der Erfindung werden folgende Beispiele angegeben:
1. Für die Dichtung eines Speicherraumes, die mit 27 l/m² ≃ 40 kg/m² Trichloräthylen überschichtet ist:
   1 Gewichtsteil Destillationsbitumen B 65
   3 Gewichtsteile Kalksteinmehl mit 90 % an Korndurchmesser < 0,09 mm
   Schichtdicke 40 mm ≙ ca. 80 kg/m²
2. Für eine andere Dichtung eines Speicherraumes, die mit 16 l/m² ≃ 24 kg/m² Trichloräthylen beschichtet ist:
   8 Gewichtsteile Destillationsbitumen B 45
   22 Gewichtsteile Kalksteinmehl
   30 Gewichtsteile Sand 0/3 mm
   40 Gewichtsteile Naturstein-Splitt 2/11 mm Schichtdicke 60 mm ≙ 150 kg/m²

Bei Proben der in den obigen Beispielen angegebenen Zusammensetzungen war nach achtmonatiger Prüfdauer keine Permabilität der Dichtungsschichten feststellbar.

## Patentansprüche

1. Dichtung (13) für Speicherräume von Flüssigkeiten, Feststoffen, Feststoffgemischen, Schüttgütern, Abfallstoffen, Sondermüll u.dgl., mit mindestens einer Schicht (14, 15) aus einer Dichtungsmasse, die ein bituminöses Bindemittel und feinkörnige Zuschlagstoffe (Füller) aufweist, **dadurch gekennzeichnet,** daß die Dichtungsmasse gerade soviel bituminöses Bindemittel enthält, daß sie im heißen Zustand ohne nennenswerte Verdichtungsenergie hohlraumfrei eingebaut werden kann und daß die Dicke (d) der Schicht (14, 15) mindestens so groß ist, daß die in ihr je Flächeneinheit enthaltene Bindemittelmenge mindestens die Hälfte der auf die Flächeneinheit ungünstigstenfalls dauernd einwirkenden Menge von im Speicherraum vorhandenen organischen Treibstoffen oder Lösungsmitteln, insbesondere von chlorierten Kohlenwasserstoffen ausmacht.

2. Dichtung nach Anspruch 1, **dadurch gekennzeichnet,** daß die Dichtungsmasse auch gröbere Zuschlagstoffe (Korndurchmesser > 0,09 mm) enthält und daß der Gewichtsanteil an Füller (Korndurchmesser < 0,09 mm), bezogen auf das Gesamtgewicht aller Zuschlagstoffe, so groß ist, daß im eingebauten Zustand die aus Füller und Bindemittel bestehende Mörtelmenge größer ist als das Volumen der Hohlräume zwischen den gröberen Zuschlagstoffen.

3. Dichtung nach Anspruch 1 oder 2, **dadurch gekennzeichnet,** daß der Gewichtsanteil der feinkörnigen Zuschlagstoffe mindestens 20 % des Gesamtgewichtes aller Zuschlagstoffe beträgt.

4. Dichtung nach einem der Ansprüche 1 bis 3, **dadurch gekennzeichnet,** daß die Zuschlagstoffe Faserstoffe als versteifende Stoffe enthalten.

5. Dichtung nach einem der Ansprüche 1 bis 4, **dadurch gekennzeichnet,** daß das bituminöse Bindemittel einen Zusatz an Polymeren enthält.

6. Dichtung nach einem der Ansprüche 1 bis 5, **dadurch gekennzeichnet,** daß der Polymer-Zusatz aus Polyäthylen oder Polypropylen besteht.

7. Dichtung nach einem der Ansprüche 1 bis 6, die als Oberflächendichtung (15) ausgebildet ist, **dadurch gekennzeichnet,** daß die dem Speicherraum zugewandte Oberfläche der Dichtung mit einer Schutzschicht (18) abgedeckt ist.

8. Dichtung nach einem der Ansprüche 1 bis 7, **dadurch gekennzeichnet,** daß die Schutzschicht (18) aus permeablen Stoffen, wie Erde, Sand oder Beton, besteht.

9. Dichtung nach einem der Ansprüche 1 bis 7, **dadurch gekennzeichnet,** daß die Schutzschicht (18) aus einer Kunstharzbeschichtungsmasse besteht.

10. Dichtung nach einem der Ansprüche 1 bis 9, **dadurch gekennzeichnet,** daß die Schutzschicht (18) Epoxidharze oder Teer-Epoxidharzgemische enthält.

11. Dichtung nach einem der Ansprüche 1 bis 10, **dadurch gekennzeichnet,** daß die Dichtungsmasse aus einem Gewichtsteil Bitumen B 65 und drei Gewichtsteilen Gesteinsmehl besteht, von dem mindestens 80 % eine Korngröße < 0,09 mm haben.

12. Dichtung nach einem der Ansprüche 1 bis 11, **gekennzeichnet durch** zwei Dichtungsschichten (14 und 15).

## Claims

1. Sealing system (13) for storage reservoirs holding liquids, solid matter, fluid mixtures, bulk goods, waste material, special refuse and the like, which are provided with at least one sealing layer (14, 15) of a compound including a bituminous binder and fine-grained aggregates (filler), **characterized** by the fact that the sealing compound contains just enough bituminous binder to permit said sealing compound to be processed into a voidless coating by application in a hot state without major amounts of compression energy, and that the thickness d of the sealing layer (14, 15) is at least such that the quantity of binder contained therein per unit area amounts to about one-half of the quantity of fuels or solvents (particularly chlorinated hydrocarbons) contained in said storage reservoir to which this unit area is continuously exposed in the last favourable case.

2. Sealing system as set forth in Claim 1, **characterized** by the fact that said sealing compound also contains more coarsely grained aggregate materials (grain diameter > 0.09 mm) , and that the percentage by weight of filler (i.e., aggregate material with grain diameters < 0.09 mm), when related to the total weight of all aggregate, is large enough to ensure that, upon installation of the sealing system, the quantity of the mortar consisting of filler and binder exceeds the volume of the voids between the more coarsely grained aggregates.

3. Sealing system as set forth in any of Claims 1 or 2, **characterized** by the fact that the percentage by weight of the fine-grained aggregates amounts to at least 20% of the total weight of all aggregate material.

4. Sealing system as set forth in any of Claims 1 through 3, **characterized** by the fact that the aggregate material contains fiber material for enhanced stiffness.

5. Sealing system as set forth in any of Claims 1 through 4, **characterized** by the fact that the bituminous binder contains added polymers.

6. Sealing system as set forth in any of Claims 1 through 5, **characterized** by the fact that the added polymers consist of polyethylene or polypropylene.

7. Sealing system as set forth in any of Claims 1 through 6, **characterized** by the fact that the surface of the sealing system which faces the storage reservoir is covered with a protective layer (18)

8. Sealing system as set forth in any of Claims 1 through 7, **characterized** by the fact that the protective layer (18) consists of permeable materials such as soil, sand, or concrete.

9. Sealing system as set forth in any of Claims 1 through 7, **characterized** by the fact that the protective layer (18) consists of a synthetic resin sealing compound.

10. Sealing system as set forth in any of Claims 1 through 9, **characterized** by the fact that the protective layer (18) contains epoxide resins or tar-epoxide mixtures.

11. Sealing system as set forth in any of Claims 1 through 10, **characterized** by the fact that the sealing compound consists of one part by weight of B 65 bitumen and three parts by weight of rock dust, with 80% of said rock dust consisting of particles measuring less than 0.09 mm in diameter.

12. Sealing system as set forth in any of Claims 1 through 11, **characterized** by the fact that there are provided two sealing layers (14 and 15).

## Revendications

1. Garniture d'étanchéité (13) pour enceintes d'entreposage de liquides, de substances solides, de mélanges de substances solides, de matières en vrac, de déchets, de déchets spéciaux et autres produits analogues, avec au moins une couche (14, 15) d'un matériau d'étanchéité comportant un liant bitumineux et des additifs finement granulés (charges), caractérisée en ce que le matériau d'étanchéité contient une quantité de liant bitumineux telle qu'elle peut être incorporée à l'état chaud en l'absence de formation de vides sans énergie notable de compactage et que l'épaisseur (d) de la couche (14, 15) possède au moins une valeur telle que la quantité de liant qu'elle contient par unité de surface représente au moins la moitié de la quantité de carburants ou de solvants organiques, en particulier d'hydrocarbures chlorés, contenus dans l'enceinte de stockage, agissant en permanence sur cette unité de surface dans le cas le plus défavorable.

2. Garniture d'étanchéité selon la revendication 1, caractérisée en ce que le matériau d'étanchéité contient également des additifs plus gros (granulométrie supérieure à 0,09 mm) et que la part en poids de substances de charge (granulométrie < 0,09 mm) par rapport au poids total de tous les additifs est telle que la quantité de mortier composée de charges et de liant est supérieure, à l'état incorporé, au volume des vides entre les additifs de granulométrie plus grosse.

3. Garniture d'étanchéité selon la revendication 1 ou 2, caractérisée en ce que la part en poids des additifs fins correspond à au moins 20% du poids total de tous les additifs.

4. Garniture d'étanchéité selon l'une des revendications 1 à 3, caractérisée en ce que les additifs contiennent des substances fibreuses comme matériaux de renforcement.

5. Garniture d'étanchéité selon l'une des revendications 1 à 4, caractérisée en ce que le liant bitumineux contient une addition de polymère.

6. Garniture d'étanchéité selon l'une des revendications 1 à 5, caractérisée en ce que l'addition de polymère consiste en polyéthylène ou en polypropylène.

7. Garniture d'étanchéité selon l'une des revendications 1 à 6, configurée comme garniture d'étanchéité de surface (15), caractérisée en ce que la surface de la garniture d'étanchéité tournée vers l'enceinte de stockage est recouverte d'une couche protectrice (18).

8. Garniture d'étanchéité selon l'une des revendications 1 à 7, caractérisée en ce que la couche protectrice (18) se compose de substances perméables comme la terre, le sable ou le béton.

9. Garniture d'étanchéité selon l'une des revendications 1 à 7, caractérisée en ce que la couche protectrice (18) se compose d'un matériau de revêtement à base de résine synthétique.

10. Garniture d'étanchéité selon l'une des revendications 1 à 9, caractérisée en ce que la couche protectrice (18) contient une résine époxy ou un mélange de résine époxy - goudron.

11. Garniture d'étanchéité selon l'une des revendications 1 à 10, caractérisée en ce que le matériau d'étanchéité se compose d'une partie en poids de bitume B 65 et trois parties en poids de poudre de roche, dont au moins 80% ont une granulométrie < 0,09 mm.

12. Garniture d'étanchéité selon l'une des revendications 1 à 11, caractérisée par deux couches d'étanchéité (14 et 15).
